# EUROPEAN PATENT SPECIFICATION

(11) **EP 0 103 261 B1**
(45) Date of publication and mention of the grant of the patent: **19.07.1995**
(21) Application number: 83108780.4
(22) Date of filing: 06.09.1983
(51) Int. Cl.: C08G 75/02, C08J 11/00

(54) **Continuous extraction of polyphenylene sulfide**
Kontinuierliche Extraktion von Poly(phenylensulfid)
Extraction continue de poly(sulfide de phénylène)

(30) Priority: 10.09.1982 US 416756
(43) Date of publication of application: 21.03.1984
(73) Proprietor: PHILLIPS PETROLEUM COMPANY, Bartlesville Oklahoma 74004 (US)
(72) Inventor: Stark, Fred Theodore, Bartlesville Oklahoma 74003 (US); Nesheiwat, Afif Michael, Bartlesville Oklahoma 74003 (US)
(74) Representative: Dost, Wolfgang, Dr.rer.nat., Dipl.-Chem.

(56) References cited:
- US-A- 3 457 242
- US-A- 3 478 000
- US-A- 3 800 845
- US-A- 3 919 177
- US-A- 3 956 060
- US-A- 4 025 496

## Description

### BACKGROUND OF THE INVENTION

This invention relates to the recovery and purification of poly(arylene sulfide) resin from the reaction mixture. In another of its aspects, this invention relates to the extraction of water soluble impurities from poly(arylene sulfide) particles. In still another aspect of this invention, it relates to a continuous process for separating impurities from poly(phenylene sulfide) particles. In yet another aspect of this invention it relates to the use of a closed cycle of heat exchange streams for heating and cooling polymer slurry.

In the production of poly(arylene sulfide), particularly poly(phenylene sulfide), the reaction mixture usually contains ash producing substances, particularly alkali metal salts. Methods for separating the polymer from the liquid ingredients of the reaction mixture, i.e., unreacted reactant such as dihalobenzene and polyhalobenzene containing more than two halogen constituents; polar diluents, such as N-methylpyrrolidone; and residual water are well known in the art. Some solid contaminant is also removed with the removal of these components of the reaction mixture, but often fairly large amounts of ash-producing, solid contaminants, such as sodium chloride, remain with the polymer.

Up to now, the solid contaminant remaining with the poly(arylene sulfide) has been removed by repeated extraction with hot water. It has now been found that at an increased temperature level, a continuous process for extracting contaminants from poly(phenylene sulfide) particles provides a quicker, more efficient method of separation than batch processes of the same temperature.

It is, therefore, an object of this invention to provide an efficient method for the removal of ash-forming contaminants, particularly soluble alkali metal salts from poly(phenylene sulfide) particles. It is another object of this invention to provide an efficient continuous method for removing contaminants from phenylene sulfide polymers utilizing a closed cycle of heat exchange medium in the heating and cooling of the treatment slurry.

Other aspects, objects and the various advantages of this invention will become apparent from a reading of the specification, examination of the drawings, and reading the claims.

### THE INVENTION

In accordance with this invention, a method is provided for extracting water soluble impurities from aqueous slurries of arylene sulfide polymers containing water soluble impurities as defined in claim 1.

In the most preferred embodiment of the invention, a method is set out, as is exemplified herein, in which heat exchange media are indirectly contacted with a treatment slurry after it has been contacted with the closed cycle heat exchange medium in both the heating and the cooling phases of the operation and with passage of the slurry through an agitated tank during the period at which it is held at the highest temperature attained to assure good contact of the contaminant with the heated extractant.

The phenylene sulfide polymer which can be treated by the process of this invention can be of any particle size produced in the recovery of polymer from the reaction mixture. The usual particle size of the polymer will range from a fine powder ranging in average size of particle from about 5 to about 1500 micrometers and generally within the range from about 10 to about 150 micrometers such as are produced by recovery from the polymer slurry by a method such as flashing the polar diluent. It is also applicable for the extraction of polymer particles of greater size which are produced by recovery of polymer in the reaction slurry by other methods.

The method of extraction according to this invention is applicable to polymers produced by any of the known methods for producing poly(arylene sulfide) such as those set out in US-A-3,354,129 in which polyphenyl aromatic compounds, alkali metal sulfides, and organic amides are contacted at polymerization conditions, or alternatively, by such methods as set out in US-A-3,919,177 in which 2-dihalobenzene, and alkali metal sulfide, and organic amide, and an alkali metal carboxylate are contacted at polymerization conditions, often together with an alkali metal hydroxide, such as sodium hydroxide, and/or a polyhalo aromatic compound, such as 1,2,4-trichlorobenzene. If desired, a lithium halide such as lithium chloride, can be used in place of the alkali metal carboxylate in the production of the polymer. If desired, water which can be present with the reactant can be removed by distillation prior to the polymerization reaction.

The processes set out above to produce these polymers will also produce ash-forming contaminants such as alkali metal halides, particularly sodium chloride, and also include such contaminants as an amino-acid salt, e.g. alkali metal N-methyl-N-(4-chlorophenyl)-4-aminobutyrate. Sodium chloride is often produced in an amount of .45 kilograms (1 pound) of salt per pound of polymer. It has been found that 2 to about 3 percent based on poly(phenylene sulfide) of the amino-acid salt can also be produced in the reaction process. According to the process of this invention, a sufficient amount of these contaminants can be removed from poly(phenylene sulfide) particle products to provide the sufficiently low ash content required for commercial uses.

In the process of this invention, it has been found that for a continuous successful extraction operation, a water slurry containing 3-30 per cent by weight polymer particles, preferably about 5 to about 20 percent by weight polymer particles, must be raised to a temperature in the range of 182 to 216°C to dissolve the contaminants in the water extraction agent. As will be set out below in the examples which are to be read in conjunction with the drawing, the present invention provides a continuous process for extraction of contaminants of the polymer particles which is quicker and more efficient than the previously used processes.

### THE DRAWING

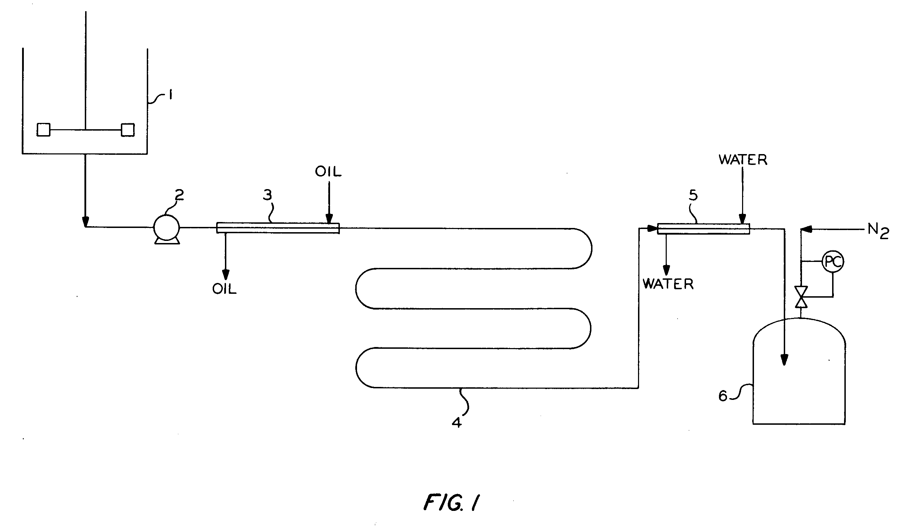

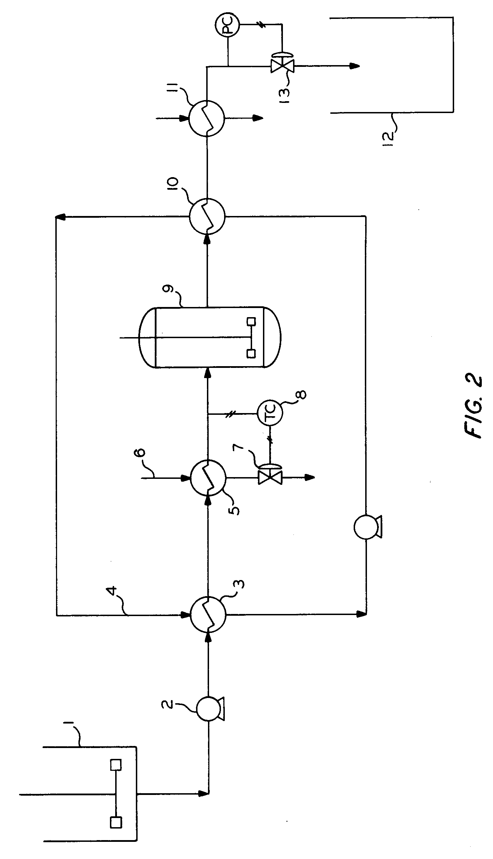

In the drawing, Figure 1 is a line draw continuous high temperature salt extraction unit without a closed cycle heat exchange medium which therefore per se is outside of the scopes of the claims. Figure 2 is a line drawing of a continuous high temperature salt extraction unit incorporating a closed cycle heat exchange medium system.

Example I, below, illustrates the process as set out in Figure 1 and Example III illustrates the process as set out in Figure 2.

### EXAMPLE I

In this example, a continuous process for extracting water soluble impurities, chiefly sodium chloride from essentially uncured poly(phenylene sulfide) (PPS) without the use of a closed cycle heat exchange medium system which therefore per se is outside of the scope of the claims is described.

As shown in Figure 1, commercially produced Ryton® PPS resin that had undergone several warm water washing operations was mixed in a stirred tank (1) with warm water to produce a slurry having a temperature of about 60°C (140°F) and containing about 8 to 14 percent by weight of PPS. The PPS/water slurry was pumped, to a pressure of over 1378 KPa (200 psig), at a rate of 1.5 liters (0.4 gallon) per minute by a high-pressure Moyno pump (2) through several sections of jacketed pipes in series having inner tubes of 1.25 centimeters (½ inch) diameter. In the first pipe section (3) being 4.88 meters (16 feet long), a hot heat transfer oil (Mobiltherm, marketed by Mobil Oil Company) having a temperature of about 182.22°C (360° F) was pumped through the outer jacket countercurrently to the flow of the PPS/water slurry in the inner tube. The slurry was heated from about 60°C (140° F) to about 193.33°C (380° F), while the heat transfer oil was cooled to about 82.22°C (180° F). The residence time of the slurry in this pipe section was about 2 seconds.

The slurry was then pumped through several pipe sections (4) so as to attain a total residence time of about 80 seconds, during which the deashing (salt extraction) at about 187.78°C (370° F) occurred. Subsequently the hot slurry was cooled in an 2.44 meters (8-foot) long, jacketed pipe section (5) with cold water to a final temperature of about 65.56°C (150° F) and collected in a tank (6) and held there under nitrogen pressure of 1378 KPa (200 psig). Then the pressure was relieved, and the cooled slurry was filtered through a 0,46 square meters (5 square feet) Bird Young filter and, optionally, washed with cold water.

### EXAMPLE II

Wet, washed PPS samples deashed by the process of Example I were analyzed for ash content. Ash levels and pertinent process parameters are listed in Table I.

**TABLE I**

| Run | Type of Deashing Operation | Weight-% of PPS in slurry | Deashing Temperature °C °F | Ash Content (weight-%) Wet Basis |
|---|---|---|---|---|
| 1 | Feed | - | - | 1.6 - 1.8 |
| 2 | Continuous | 8.0 | 185. (365°F) | 0.94 |
| 3 | Continuous | 8.0 | 185 (365°F) | 0.92 |
| 4 | Continuous | 14.0 | 188.89 (372°F) | 0.88 |
| 5 | Continuous | 14.0 | 188.89 (372°F) | 0.80 |
| 6 | Batch-Wise | 8.0 | 182.22 (360°F) | 0.80 - 0.83 |

Data in Table I indicate that an approximately 50 percent reduction in ash content of prewashed PPS (Run 1) was achieved by a continuous deashing operation at 185 - 188.89°C (365 -372° F), which lasted about 1.5 minutes. The ash level of PPS samples of Runs 2 - 5 was comparable to that of Run 6 deashed by a batch process in a stirred vessel at 182.22°C (360° F), which lasted 5 - 10 minutes. This result indicates that salt extraction from PPS according to the continuous process of Example I was considerably faster and thus more efficient than a batch process conducted at a comparable temperature.

### EXAMPLE III

In this calculated example the design of an energy efficient continuous process for extracting impurities, primarily sodium chloride, from PPS resin with hot water is described. As shown in Figure 2, an aqueous slurry of PPS having a temperature of about 60.0°C (140° F) is prepared in a slurry tank (1) and is pumped by means of a high pressure pump (2) through a heat exchanger (3) consisting of a steel tube of 3.81 diameter (1.5 inch) diameter and approximately 6.09 meters (20 feet) length enclosed in a jacket. A hot heat transfer fluid (4) having a temperature of about 182.22°C (360° F) is pumped through the outer jacket of said heat exchanger countercurrently to the flow of the PPS/water slurry in the inner tube. The slurry is heated to about 160.0°C (320° F), while the heat transfer fluid (4) is cooled to about 82.22°C (180° F) and pumped in a closed loop to heat exchange unit (10). The residence time of the slurry in heat exchanger (3) is about 1 - 10 seconds. The slurry then passes through a second heat exchanger (5), which is of similar dimensions as (3). The temperature of the slurry is raised to about 204.44°C (400° F) by the controlled countercurrent flow of hot oil (6) having a temperature of about 260.0°C (500° F). The flow rate of (6) is controlled by a valve (7) interfaced with a temperature sensor (8) located in the slurry line behind heat exchanger (5).

The slurry then flows into a tank (9) of about 56.78 liter (15 gallon) capacity for extracting a substantial portion of water-soluble impurities from PPS at a temperature of about 204.44°C (400° F) during a residence time of about 1 - 3 minutes. The tank (9) can, optionally, be equipped with a stirrer for enhanced agitation.

The PPS/water slurry is subsequently cooled to about 104.44°C (220° F) in heat exchanger (10) with dimensions similar to the ones of heat exchanger (3). Heat transfer fluid (4) from (3) having a temperature of about 82.22°C (180° F) is passed countercurrently through the outer jacket of (10) and cools the slurry to about 104.44°C - 110.0°C (220 - 230° F) while itself being heated to about 182.22°C (360° F) and recycled to (3). The slurry is finally cooled to below 93.33°C (200° F) in another heat exchanger (11) with cold water as the cooling fluid, collected in a slurry tank (12) and filtered. A pressure control valve (13) regulates the pressure in the entire deashing system to be approximately 1378 KPa (200 psig).

## Claims

1. A method for extracting water soluble impurities from an arylene sulfide polymer, which has undergone prewashing warm water operations to remove a substantial portion of said impurities,
characterized by
(1) continuously mixing said prewashed polymer containing remaining impurities with water to produce a slurry containing from 3 to 30 percent by weight poly(arylene sulfide),
(2) continuously heating a flow of said slurry by passing it through indirect heat exchange contact with hot heat exchange medium to raise the temperature of said slurry to a range from 182 to 216°C,
(3) extracting a substantial portion of said remaining impurities during a residence time at said temperature thereby deashing said polymer, and
(4) continuously separating said polymer from said slurry,
(5) said slurry being cooled by indirect contact with the heat exchange medium after been heated to said temperature of 182 to 216°C before separating of polymer from water,
(6) a closed cycle of heat exchange medium being employed to at least partially heat and to at least partially cool said slurry.

2. The method of claim 1 characterized in that said slurry is heated to a temperature within the range of 143 to 177°C by contact with said closed cycle heat exchange medium, and cooled to a temperature within the range of 88 to 121°C by contact with said closed cycle heat exchange medium.

3. The method of claim 2 characterized in that said slurry is further indirectly heat exchanged with a second heat exchange medium after contact with said closed cycle heat exchange medium to raise the temperature of said slurry to a temperature within the range of 182 to 216°C; passed through an agitator tank while in the temperature range of 182 to 216°C; contacted with said closed cycle heat exchange medium to cool said slurry; and further cooled by indirect contact with a third heat exchange medium before separation of said polymer from said water.

4. The method of any of claims 1 to 3 characterized in that said water soluble contaminant comprises alkali metal salt and said polymer is phenylene sulfide polymer.

5. The method of claim 4 characterized in that said alkali metal salt is chosen from NaCl, alkali metal N-methyl-N (4-chlorophenyl)-4-aminobutyrate, and mixtures thereof.

## Patentansprüche

1. Verfahren zur Extraktion von wasserlöslichen Verunreinigungen aus einem Arylensulfid-Polymeren, das Vorwasch-Vorgängen mit warmem Wasser zur Entfernung eines wesentlichen Anteils der Verunreinigungen unterzogen worden ist, gekennzeichnet durch
(1) kontinuierliches Vermischen des restliche Verunreinigungen enthaltenden vorgewaschenen Polymeren mit Wasser unter Bildung einer Aufschlämmung mit einem Gehalt an 3 bis 30 Gew.-% Poly-(arylensulfid),
(2) kontinuierliches Erwärmen eines Stroms der Aufschlämmung unter Durchleiten durch einen indirekten Wärmeaustauschkontakt mit einem heißen Austauschmedium zur Erhöhung der Temperatur der Aufschlämmung auf einen Bereich von 182 bis 216°C,
(3) Extrahieren eines wesentlichen Teils der verbleibenden Verunreinigungen wahrend einer Verweilzeit bei dieser Temperatur, um das Polymere zu entaschen, und
(4) kontinuierliches Abtrennen des Polymeren von der Aufschlämmung,
(5) wobei die Aufschlämmung durch indirekten Kontakt mit dem Wärmeaustauschmedium nach dem Erwärmen auf die Temperatur von 182 bis 216°C vor dem Abtrennen des Polieren von Wasser gekühlt wird,
(6) wobei ein geschlossener Wärmeaustauschmedium-Kreislauf angewandt wird, um die Aufschlämmung zumindest partiell zu erwärmen und zumindest partiell abzukühlen.

2. Verfahren nach Anspruch 1, dadurch gekennzeichnet, daß die Aufschlämmung auf eine Temperatur im Bereich von 143 bis 177°C durch Kontakt mit dem Wärmeaustauschmedium im geschlossenen Kreislauf erwärmt wird und auf eine Temperatur im Bereich von 88 bis 121°C durch Kontakt mit dem geschlossenen Wärmeaustauschmedium-Kreislauf abgekühlt wird.

3. Verfahren nach Anspruch 2, dadurch gekennzeichnet, daß die Aufschlämmung ferner einem indirekten Wärmeaustausch mit einem zweiten Wärmeaustauschmedium nach Kontakt mit dem geschlossenen Wärmeaustauschmedium-Kreislauf unterworfen wird, um die Temperatur der Aufschlämmung auf eine Temperatur im Bereich von 182 bis 216°C anzuheben; durch einen Bewegungstank geleitet wird, wobei sie sich im Temperaturbereich von 182 bis 216°C befindet; mit dem geschlossenen Wärmeaustauschmedium-Kreislauf in Kontakt gebracht wird, um die Aufschlämmung abzukühlen; und ferner durch indirekten Kontakt mit einem dritten Wärmeaustauschmedium vor Abtrennung des Polymeren vom Wasser abgekühlt wird.

4. Verfahren nach einem der Ansprüche 1 bis 3, dadurch gekennzeichnet, daß die wasserlösliche Verunreinigung ein Alkalimetallsalz umfaßt und daß es sich beim Polymeren um ein Phenylensulfid-Polymeres handelt.

5. Verfahren nach Anspruch 4, dadurch gekennzeichnet, daß das Alkalimetallsalz unter NaCl, Alkalimetall-N-methyl-N-(4-chlorphenyl)-4-aminobutyrat und Gemischen davon ausgewählt ist.

## Revendications

1. Un procédé pour extraire des impuretés solubles dans l'eau d'un polymère de sulfure d'arylène, qui a subi des opérations de prélavage à l'eau chaude pour éliminer une fraction substantielle de ces impuretés, caractérisé en ce que
1°) on mélange en continu le polymère prélavé contenant les impuretés résiduelles avec de l'eau pour produire une bouillie contenant de 3 à 30 % en poids de poly(sulfure d'arylène),
2°) on chauffe en continu un flux de cette bouillie en le faisant passer au moyen d'un contact d'échange thermique direct avec un milieu d'échange thermique chaud afin d'élever la température de cette bouillie dans une plage allant de 182 à 216 °C,
3°) on extrait une fraction substantielle desdites impuretés résiduelles pendant un temps de séjour à ladite température, de manière à procéder ainsi à l'élimination des cendres dans le polymère, et
4°) on sépare en continu le polymère de la bouillie,
5°) la bouillie étant refroidie par contact indirect avec le milieu d'échange thermique après avoir été chauffée à ladite température de 182 à 216°C avant la séparation du polymère d'avec l'eau,
6°) un cycle fermé de milieu d'échange thermique étant employé pour au moins partiellement chauffer et pour au moins partiellement refroidir la bouillie.

2. Le procédé de la revendication 1, caractérisé en ce que la bouillie est chauffée à une température comprise dans la plage allant de 143 à 177 °C par mise en contact avec le milieu d'échange thermique en cycle fermé, et refroidie jusqu'à une température située dans la plage allant de 88 à 121 °C par contact avec le milieu d'échange thermique en cycle fermé.

3. Le procédé de la revendication 2, caractérisé en ce que la bouillie subit un autre échanger thermique direct avec un second milieu d'échange thermique après contact avec le milieu d'échange thermique en cycle fermé afin d'augmenter la température de la bouillie à une température comprise dans la plage allant de 182 à 216 °C ; on la fait passer par un réservoir agitateur pendant qu'elle est dans la plage de température de 182 à 216 °C ; on la met en contact avec le milieu d'échange thermique en cycle fermé afin de refroidir cette bouillie ; et on la refroidit à nouveau par contact indirect avec un troisième milieu d'échange thermique avant séparation du polymère d'avec l'eau.

4. Le procédé de l'une des revendications 1 à 3, caractérisé en ce que le contaminant soluble dans l'eau comprend un sel de métal alcalin et le polymère est un polymère de sulfure de phénylène.

5. Le procédé de la revendication 4, caractérisé en ce que le sel de métal alcalin est choisi parmi NaCl, un N-méthyl-N-(4-chlorophényl)-4-aminobutyrate de métal alcalin et leurs mélanges.
